# EUROPÄISCHE PATENTSCHRIFT

(11) **EP 2 694 299 B1**
(45) Veröffentlichungstag und Bekanntmachung des Hinweises auf die Patenterteilung: **10.01.2018**
(21) Anmeldenummer: 12710133.5
(22) Anmeldetag: 01.03.2012
(51) Int. Cl.: B42D 25/369, B42D 25/373, B42D 25/378, B42D 25/41

(54) **OPTISCH VARIABLES SICHERHEITSELEMENT MIT OPTISCH VARIABLER FARBSCHICHT**
OPTICALLY VARIABLE SECURITY ELEMENT COMPRISING OPTICALLY VARIABLE COLOUR LAYER
ÉLÉMENT DE SÉCURITÉ VARIABLE OPTIQUEMENT DOTÉ D'UNE COUCHE DE COULEUR VARIABLE OPTIQUEMENT

(30) Priorität: 01.04.2011 DE 102011015837
(43) Veröffentlichungstag der Anmeldung: 12.02.2014
(73) Patentinhaber: Giesecke+Devrient Currency Technology GmbH, 81677 München (DE)
(72) Erfinder: BORNSCHLEGL, Alexander, 81735 München (DE); MENGEL, Christoph, 83607 Holzkirchen (DE)
(86) Internationale Anmeldenummer: PCT/EP2012/000903
(87) Internationale Veröffentlichungsnummer: WO 2012/130370

(56) Entgegenhaltungen:
- EP-A1- 1 251 152
- EP-A1- 2 244 268
- WO-A1-2004/072186
- WO-A1-2007/028267
- WO-A1-2009/014675
- WO-A2-2005/071136
- WO-A2-2009/074284
- DE-A1-102009 024 447

## Beschreibung

Die Erfindung betrifft ein optisch variables Sicherheitselement zur Absicherung von Wertgegenständen mit einer optisch variablen Farbschicht. Die Erfindung betrifft ferner ein Verfahren zur Herstellung eines derartigen Sicherheitselements, eine Sicherheitsanordnung mit einem solchen Sicherheitselement und einen entsprechend ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente, die betrachtungswinkelabhängige visuelle Effekte zeigen, da diese selbst mit modernsten Kopiergeräten nicht reproduziert werden können. Für diesen Zweck werden seit einiger Zeit auch magnetisch ausrichtbare Effektpigmente eingesetzt, die magnetisch in Form eines darzustellenden Motivs ausgerichtet werden können.

Aus der Druckschrift WO 2009/074284 A2 ist eine Kombination von ersten optisch variablen Effektpigmenten und zweiten, durch ein äußeres Magnetfeld reversibel ausrichtbaren Effektpigmenten bekannt. Der optisch variable Effekt der ersten Effektpigmente tritt dabei mit den interaktiv auslösbaren, dreidimensional anmutenden Erscheinungsbildern in Wechselwirkung, die durch die magnetisch ausrichtbaren zweiten Effektpigmente erzeugt werden. Die zweiten Effektpigmente weisen keine Interferenzbeschichtung mit Eisenoxid auf.

DE 10 2009 024447 A1 offenbart ein Sicherheitselement mit einem durch ein externes Magnetfeld veränderbaren optischen Erscheinungsbild, wobei das Sicherheitselement eine Vielzahl von Mikrokapseln aufweist, die eine Suspension aus einer Trägerflüssigkeit und magnetischen Nanopartikeln enthalten, welche in einem externen Magnetfeld in den Mikrokapseln reversibel einen photonischen Kristall ausbilden.

Ausgehend davon liegt der Erfindung die Aufgabe zugrunde, optisch variable Sicherheitselemente mit magnetisch ausrichtbaren Magnetpigmenten weiter zu verbessern und insbesondere einfach und kostengünstig herstellbare optisch variable Sicherheitselemente mit attraktivem visuellem Erscheinungsbild anzugeben. Im Idealfall sollen die vorteilhaften Eigenschaften bei sparsamstem Einsatz oder sogar bei vollständigem Verzicht auf gesundheitsgefährdende oder umweltschädliche Substanzen erzielt werden.

Diese Aufgabe wird durch das Sicherheitselement mit den Merkmalen des Hauptanspruchs gelöst. Ein Verfahren zur Herstellung eines derartigen Sicherheitselements, eine Sicherheitsanordnung mit einem solchen Sicherheitselement und ein entsprechend ausgestatteter Datenträger sind in den nebengeordneten Ansprüchen angegeben. Weiterbildungen der Erfindung sind Gegenstand der abhängigen Ansprüche.

Gemäß der Erfindung enthält die optisch variable Farbschicht eines gattungsgemäßen Sicherheitselements eine Vielzahl von Mikrokapseln, die jeweils eine Kapselhülle, eine in der Kapselhülle eingeschlossene Trägerflüssigkeit und zumindest ein optisch variables und magnetisch ausrichtbares Pigment aufweisen, welches in der Mikrokapsel im Wesentlichen frei drehbar und durch ein äußeres Magnetfeld reversibel ausrichtbar ist und welches mehrschichtig mit zumindest einer magnetischen Schicht und mit zumindest einer nichtmagnetischen Schicht ausgebildet ist, wobei das Pigment ein Trägermaterial aus Al₂O₃, SiO₂, natürliches Mica, synthetisches Mica oder synthetisches Glasmaterial umfasst und das Trägermaterial eine Interferenzbeschichtung aus Eisenoxid mit einer oder mehreren Schichten aus SiO₂, TiO₂ oder SnO₂, oder das Trägermaterial eine zweischichtige Interferenzbeschichtung aus Eisenoxid und Magnesiumoxid, oder das Trägermaterial eine Interferenzbeschichtung aus Magnesiumoxid dotiertem Eisenoxid, aufweist, das wenigstens eine Mehrschichtpigment als nichtsphärisches Pigment, insbesondere plättchenförmig, ausgebildet ist, wobei das Verhältnis des größten zum kleinsten Durchmesser, nämlich das Durchmesser-zu-Dickenverhältnis, des wenigstens einen nichtsphärischen Pigments mehr als 4:1 beträgt, und wobei die Mikrokapseln neben dem zumindest einem optisch variablen und magnetisch ausrichtbaren Pigment keine zusätzlichen Farbmittel enthalten, und die optisch variable Farbschicht neben den in den Mikrokapseln enthaltenen Pigmenten keine weiteren farbigen oder optisch variablen Pigmente enthält.

Im Rahmen der vorliegenden Erfindung wird unter der Formulierung "optisch variabel" oder "optische Variabilität" die Änderung einer von einem Betrachter erfassbaren optischen Eigenschaft eines von dem Betrachter betrachteten erfindungsgemäßen Sicherheitselements oder Datenträgers mit einer erfindungsgemäßen Farbschicht verstanden. Zu den variablen optischen Eigenschaften werden in Übereinstimmung mit den Erläuterungen auf der Internetseite "http://de.wikipedia.org/wiki/Farbs%C3%A4ttigung" insbesondere die vom Menschen als grundlegend empfundenen Eigenschaften einer Farbe, nämlich Farbton, Helligkeit und Farbsättigung verstanden. Die Qualität der Farbwirkung auf einen Betrachter eines erfindungsgemäßen Sicherheitselements kann ferner durch Wertigkeiten, wie Buntheit, Farbigkeit (Farbintensität), Chromatizität, Farbtiefe, Brillanz und Graustich beschrieben werden. Ferner können die erfindungsgemäßen Sicherheitselemente, Datenträger oder Farbschichten auch durch weitere optische Eigenschaften charakterisiert werden, z. B. durch ihr Reflexionsvermögen.

Ändert sich bei Betrachtung eines erfindungsgemäßen Sicherheitselements oder Datenträgers mit einer erfindungsgemäßen Farbschicht aus den nachstehend beschriebenen Gründen z.B. eine der vorstehend genannten optischen Eigenschaften, insbesondere der Farbton, die Helligkeit, die Farbsättigung oder das Reflexionsvermögen des betrachteten Sicherheitselements, Datenträgers oder der Farbschicht, wird im Rahmen der vorliegenden Erfindung von einem optisch variablen Sicherheitselement, Datenträger oder einer optisch variablen Farbschicht gesprochen.

Ein erfindungsgemäßes Sicherheitselement oder ein erfindungsgemäßer Datenträger kann nun aus verschiedenen Gründen veränderte optische Eigenschaften gegenüber dem Betrachter aufweisen. Beispielsweise können sich die optischen Eigenschaften des betrachteten Sicherheitselements/Datenträgers beim Kippen des Sicherheitselements/Datenträgers verändern, weil eine oder mehrere der vorstehend genannten optischen Eigenschaft unter verschiedenen Betrachtungswinkeln verschieden sind. D.h., der Betrachter nimmt bei Betrachtung eines erfindungsgemäßen Sicherheitselements/Datenträgers unter unterschiedlichen Betrachtungswinkeln unterschiedliche Bildeindrücke wahr. Ein für den Betrachter relativ eindeutig wahrnehmbarer Kippeffekt und damit für den Fälschungsschutz der erfindungsgemäßen Sicherheitselemente oder Datenträger besonders wertvoller Kippeffekt ist ein sogenannter Farbkippeffekt, also die Veränderung des Farbtons des betrachteten Sicherheitselements bei Änderung der Betrachtungsrichtung. Wie bereits erwähnt, umfasst der Begriff "optisch variabel" erfindungsgemäß aber jede Änderung einer optischen Eigenschaft des betrachteten Sicherheitselements/Datenträgers, also z.B. auch die Änderung der Helligkeit, der Farbsättigung oder des Reflexionsvermögens beim Kippen des Sicherheitselements oder Datenträgers.

Der optisch variable Effekt eines erfindungsgemäßen Sicherheitselements/Datenträgers kann unterschiedliche Ursachen haben. Zum einen können sich die vom Betrachter erfassbaren optischen Eigenschaften des erfindungsgemäßen Sicherheitselements/Datenträgers bzw. der erfindungsgemäßen Farbschicht durch die erfindungsgemäß eingesetzten optisch variablen und magnetischen Pigmente, wie oben ausgeführt, beim Kippen des Sicherheitselements/Datenträgers ändern. D.h., die optische Variabilität des Sicherheitselements/Datenträgers ist auf die Änderung des Betrachtungswinkels bezüglich der optisch variablen und magnetisch ausrichtbaren Pigmente zurückzuführen. Andererseits kann der Betrachter bei feststehendem Betrachtungswinkel bezüglich des Sicherheitselements/Datenträgers zumindest in den Bereichen einen veränderten Bildeindruck des Sicherheitselements/Datenträgers wahrnehmen, in denen die Orientierung der optisch variablen, magnetisch ausrichtbaren Pigmente durch Anlegen eines Magnetfeldes geändert wird. Mit anderen Worten: es kommt für das erfindungsgemäße Sicherheitselement nicht darauf an, ob sich der Bildeindruck für den Betrachter durch Kippen des Sicherheitselements/Datenträgers und der in der Farbschicht enthaltenen optisch variablen, magnetisch ausrichtbaren Pigmente ändert, oder ob sich der Bildeindruck durch Änderung der Orientierung der Pigmente bei an sich feststehender Betrachtungsrichtung ändert.

Ferner ist noch anzumerken, dass der Begriff "optisch variabel" auch auf Sicherheitselemente, Datenträger, Farbschichten oder erfindungsgemäße magnetisch ausrichtbare Pigmente zutrifft, bei denen die optische Variabilität nicht durch Kippen des Sicherheitselements oder Änderung der Orientierung der magnetisch ausrichtbaren Pigmente, sondern durch Veränderung der Beleuchtungsrichtung einer eingesetzten Lichtquelle hervorgerufen wird.

Des Weiteren ist noch anzumerken, dass der vorstehend beschriebene optisch variable Effekt für einen Betrachter wahrnehmbar, also zumindest im sichtbaren Wellenlängenbereich von ca. 380 nm bis 780 nm vorhanden sein muss. Selbstverständlich kann der optisch variable Effekt darüber hinaus auch im Wellenlängenbereich von weniger als 380 nm oder mehr als 780 nm auftreten, wodurch eine maschinelle Detektion auch in dem nichtsichtbaren Wellenlängenbereich möglich ist.

Die Erfindung beruht auf dem Gedanken, die Eigenschaften der Sicherheitselemente dadurch zu optimieren, dass gezielt ausgewählte Magnetpigmente in den Mikrokapseln der optisch variablen Farbschicht angeordnet werden, nämlich magnetisch ausrichtbare Pigmente, die gleichzeitig die gewünschte optische Variabilität bereitstellen. Die Erfinder haben nämlich überraschend gefunden, dass sich mit Pigmenten, die die beiden genannten Eigenschaften vereinen, visuell sehr eindrucksvolle Kippeffekte, insbesondere Farbkippeffekte, erzeugen lassen. Auf die bisher übliche Hinzufügung von Farbmittel zur Trägerflüssigkeit der Mikrokapseln oder die Hinzufügung weiterer farbiger oder optisch variabler Pigmente zur Farbschicht kann daher verzichtet werden. Die Herstellung der Sicherheitselemente wird dadurch vereinfacht und kostengünstiger gestaltet, ohne dass der visuelle Eindruck der Sicherheitselemente nachteilig beeinflusst wird. Zudem ermöglicht die Mehrschichtigkeit der Pigmente eine große Designfreiheit des Schichtaufbaus, da unterschiedliche Teilschichten mit gewünschter Funktionalität in einem Pigment kombiniert werden können. Ferner weist das erfindungsgemäße Sicherheitselement mit optisch variablen und zugleich magnetischen Eigenschaften aufgrund der erzielbaren eindrucksvollen optisch variablen Effekte einen sehr hohen Wiedererkennungswert und damit einen sehr hohen Fälschungsschutz auf. Auch kann durch diese Maßnahme weitestgehend auf Stoffe verzichten werden, die aus Gesundheits- und/ oder Umweltgesichtspunkten bedenklich sind.

Der Gewichtsanteil der magnetischen Substanzen in den verkapselten Pigmenten liegt mit Vorteil zwischen 10 % und 90 %, vorzugsweise zwischen 35 % und 75 %.

Ohne äußeres Magnetfeld sind die Pigmente innerhalb der Mikrokapseln vorzugsweise isotrop ausgerichtet, weisen also als Gesamtheit keine Vorzugsrichtung auf. Dabei können in der Praxis natürlich gewisse Abweichungen von der idealen isotropen Ausrichtung auftreten, abhängig beispielsweise von der geometrischen Form, der Magnetisierbarkeit, der Viskosität der Trägerflüssigkeit oder der Struktur der Verkapselung.

In einer bevorzugten Ausgestaltung beträgt das Verhältnis des größten zum kleinsten Durchmesser (Durchmesser-zu-Dickenverhältnis) der nichtsphärischen Pigmente mehr als 10:1 und besonders bevorzugt zwischen 20:1 und 200:1. Der größte Durchmesser der nichtsphärischen Pigmente liegt bevorzugt zwischen 2 µm und 150 µm, insbesondere zwischen 5 µm und 50 µm.

Plättchenförmige Magnetpigmente, insbesondere im bevorzugten Größenbereich und im bevorzugten Durchmesser-zu-Dicken-Bereich können durch ein externes Magnetfeld relativ zur Schichtebene nach Wunsch orientiert werden. Sie geben dann, wie die Lamellen einer Jalousie, je nach Orientierung den Blick auf darunterliegende Schichten entweder weitgehend frei (annähernd senkrechte Orientierung relativ zur Schichtebene) oder blockieren ihn teilweise (schräge Orientierung relativ zur Schichtebene) oder vollständig (im Wesentlichen waagrechte Orientierung relativ zur Schichtebene). Bei hohen Durchmesser-zu-Dicken-Verhältnissen lassen sich so hohe Kontraste zwischen transluzenten und deckenden Schichtbereichen einstellen.

Die Trägerflüssigkeit besteht vorzugsweise aus einer Mischung von bis zu vier Substanzklassen, nämlich aus 10 % bis 98 % eines unpolaren Trägermediums, aus 0 bis 90 % eines amphiphilen Trägermediums, aus 0 bis 10 % eines Oxidationsschutzstoffs und aus 0 bis 10 % Additiven. Bei den Additiven handelt es sich insbesondere um Netz- und Dispergieradditive, z.B. BlockCopolymere, UV- oder IR-Absorber, Polymerisations-Inhibitoren oder Stabilisatoren jeglicher Art. Im Übrigen ist in einer bevorzugten Ausführungsform vorgesehen, dass die Pigmente durch eine geeignete Behandlung, insbesondere der Beschichtung der Oberfläche der Pigmente, stabilisiert werden, so dass die magnetischen und optisch variablen Eigenschaften der erfindungsgemäßen Pigmente möglichst lange aufrechterhalten werden können. Eine Stabilisierung der Pigmente kann beispielsweise mittels einer weiter unten im Text beschriebenen Beschichtung der Oberfläche der Pigmente erfolgen. Generell ist es ferner denkbar, dass die Trägerflüssigkeit zusätzliche, insbesondere sicherheitsrelevante Merkmale enthält. Bei diesen zusätzlichen Merkmalen kann es sich z.B. um lumineszierende, insbesondere fluoreszierende Materialien handeln. Denkbar sind auch Materialien, die bei Beaufschlagung mit Laserstrahlung ihre Farbe verändern. Auch ist es grundsätzlich denkbar, dass die Trägerflüssigkeit Farbmittel enthält.

Erfindungsgemäß enthalten die Mikrokapseln allerdings neben dem zumindest einen optisch variablen und magnetisch ausrichtbaren Pigment keine zusätzlichen Farbmittel. Erfindungsgemäß enthält auch die optisch variable Farbschicht neben den in den Mikrokapseln enthaltenen Pigmenten keine weiteren farbigen oder optisch variablen Pigmente.

Die Trägerflüssigkeit ist besonders bevorzugt transparent ausgebildet. Im Rahmen der vorliegenden Erfindung wird unter einem "transparenten" Material ein Material verstanden, das einfallende elektromagnetische Strahlung zumindest im sichtbaren Wellenlängenbereich von ca. 380 nm bis ca. 780 nm im Wesentlichen vollständig durchlässt. Bei einem "transparenten" Material im Rahmen der vorliegenden Erfindung ist der Transmissionsgrad T ≥ 0,8, wobei T als Quotient der durch das Material hindurchgelassenen Strahlungsleistung L und der auf das Material eingestrahlten Strahlungsleistung Lo definiert ist. Diese exakte Definition des Transmissionsgrades (T = L/L₀) entspricht der im "Lexikon der Optik", Spektrum Akademischer Verlag, Heidelberg 2003, Band 2, Seite 366, Begriff "Transmissionsgrad" gegebenen Definition.

Darüber hinaus ist es auch denkbar, dass die Trägerflüssigkeit ein "transluzentes", "durchscheinendes" oder "semitransparentes" Material ist. Ein solches "transluzentes" Material weist im Rahmen der vorliegenden Erfindung zumindest im sichtbaren Wellenlängenbereich von ca. 380 nm bis ca. 780 nm einen Transmissionsgrad T größer 0,1 und kleiner 0,8 auf, d.h. 0,1 < T < 0,8.

Die Mikrokapseln selbst weisen einen Durchmesser zwischen 1 µm und 200 µm, vorzugsweise zwischen 2 µm und 80 µm auf. Es versteht sich, dass der Durchmesser der Mikrokapseln mit Vorteil auf die Größe der verkapselten Magnetpigmente abgestimmt ist. Die Wandstärke der Mikrokapseln liegt typischerweise zwischen 2 % und 30 %, vorzugsweise zwischen 5 % und 15 % des Durchmessers der Mikrokapseln.

Die optisch variable Farbschicht kann in einer Weiterbildung der Erfindung auf einer informationsführenden Untergrundschicht, insbesondere einer Siebdruck-, Flexodruckschicht oder einer Stichtiefdruckschicht aufgebracht sein. Darüber hinaus kann die optisch variable Farbschicht auch mit Vorteil auf einer im Wesentlichen vollflächigen Untergrundschicht, insbesondere einer farbigen Untergrundschicht, angeordnet sein. Z. B. kann die Untergrundschicht eine Komplementärfarbe zu der Farbe der optisch variablen Schicht ohne Beaufschlagung mit einem Magnetfeld aufweisen, so dass der Betrachter bei Beaufschlagung der optisch variablen Schicht mit einem Magnetfeld und der daraus resultierenden Ausrichtung der Magnetpigmente den Farbton der Komplementärfarbe der Untergrundschicht zumindest teilweise wahrnehmen kann. Auch Ausgestaltungen sind denkbar, bei denen der Farbton der Untergrundschicht auf den Farbton der optisch variablen Farbschicht so abgestimmt ist, dass sich der Farbeindruck für den Betrachter bei Beaufschlagung des Sicherheitselements mit einem Magnetfeld verändert.

Die optisch variable Farbschicht kann auch mit einer thermochromen oder magnetischen Untergrundschicht kombiniert sein, wobei die magnetische Untergrundschicht vorzugsweise in Form von Mustern, Zeichen oder einer Codierung vorliegt.

Die Erfindung umfasst auch ein Verfahren zum Herstellen eines optisch variablen Sicherheitselements zur Absicherung von Wertgegenständen, bei dem auf ein Substrat eine optisch variable Farbschicht aufgebracht wird, die eine Vielzahl von Mikrokapseln enthält, die jeweils eine Kapselhülle, eine in der Kapselhülle eingeschlossene Trägerflüssigkeit und zumindest ein optisch variables und magnetisch ausrichtbares Pigment aufweisen, welches in der Mikrokapsel im Wesentlichen frei drehbar und durch ein äußeres Magnetfeld reversibel ausrichtbar ist und welches mehrschichtig mit zumindest einer magnetischen Schicht und mit zumindest einer nichtmagnetischen Schicht ausgebildet ist, wobei das Pigment ein Trägermaterial aus Al2O3, SiO₂, natürliches Mica, synthetisches Mica oder synthetisches Glasmaterial umfasst und das Trägermaterial eine Interferenzbeschichtung aus Eisenoxid, sowie einer oder mehreren Schichten aus SiO₂, TiO₂ oder SnO₂, oder das Trägermaterial eine zweischichtige Interferenzbeschichtung aus Eisenoxid und Magnesiumoxid oder das Trägermaterial eine Interferenzbeschichtung aus Magnesiumoxid dotiertem Eisenoxid, aufweist, das wenigstens eine Mehrschichtpigment als nichtsphärisches Pigment, insbesondere plättchenförmig, ausgebildet ist, wobei das Verhältnis des größten zum kleinsten Durchmesser, nämlich Durchmesser-zu-Dickenverhältnis, des wenigstens einen nichtsphärischen Pigments mehr als 4:1 beträgt, wobei die Mikrokapseln neben dem zumindest einem optisch variablen und magnetisch ausrichtbaren Pigment keine zusätzlichen Farbmittel enthalten, und die optisch variable Farbschicht neben den in den Mikrokapseln enthaltenen Pigmenten keine weiteren farbigen oder optisch variablen Pigmente enthält.

Die Erfindung enthält ferner eine Sicherheitsanordnung zur Absicherung von Sicherheitspapieren, Wertdokumenten und dergleichen, mit einem Sicherheitselement der oben beschriebenen Art und mit einem Verifikationselement mit einem Magnetbereich. In dem Magnetbereich liegt vorteilhaft magnetisches Material in Form von Mustern, Linien, Zeichen oder einer Codierung vor. Das von dem magnetischen Material dargestellte Motiv kann offen sichtbar sein oder auch ohne Hilfsmittel verborgen sein, beispielsweise durch Überdeckung mit einer dunklen Druckschicht. Vorzugsweise ist der Magnetbereich im Wesentlichen senkrecht zur Ebene des Verifikationselements magnetisiert.

Die Erfindung umfasst weiter einen Datenträger, insbesondere ein Wertdokument, wie eine Banknote, einen Pass, eine Urkunde, eine Ausweiskarte oder dergleichen, der mit einem Sicherheitselement der beschriebenen Art oder mit einer Sicherheitsanordnung der beschriebenen Art ausgestattet ist. Enthält der Datenträger sowohl ein erfindungsgemäßes Sicherheitselement als auch ein zugehöriges Verifikationselement, so sind diese mit Vorteil geometrisch so auf dem Datenträger angeordnet, dass das Sicherheitselement durch Biegen oder Falten des Datenträgers über das Verifikationselement bringbar ist.

Bei dem Datenträger in Form einer Banknote kann es sich insbesondere um eine Papierbanknote, Polymerbanknote oder eine Folien-Papier-Verbundbanknote handeln. Bei dem Datenträger in Form einer Ausweiskarte kann es sich mit Vorteil um eine Kreditkarte, Bankkarte, eine Barzahlungskarte, eine Berechtigungskarte, einen Personalausweis oder eine Pass-Personalisierungsseite handeln.

Darüber hinaus kann das erfindungsgemäße Sicherheitselement aber auch zur Sicherung von Produkten jeglicher Art, also zur sogenannten Produktsicherung verwendet werden. Z. B. können mit dem erfindungsgemäßen Sicherheitselement Verpackungen, jeglicher Art gegen Nachahmung geschützt werden. Auch kann das erfindungsgemäße Sicherheitselement neben dem Produktschutz für den Markenschutz mit Vorteil verwendet werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig.1: eine schematische Darstellung einer Banknote mit einem erfindungsgemäßen Sicherheitselement,
- Fig. 2: einen Querschnitt durch ein Sicherheitselement nach einem Ausführungsbeispiel der Erfindung, in der linken Bildhälfte ohne und in der rechten Bildhälfte mit Verifikationseinrichtung,
- Fig. 3: schematisch eine aus der Farbschicht der Fig. 2 herausgegriffene Mikrokapsel mit ihren Bestandteilen im Querschnitt,
- Fig. 4: ein optisch variables, magnetisches Interferenzpigment nach einem nicht beanspruchten Ausführungsbeispiel der Erfindung,
- Fig. 5: ein magnetisches Mehrschichtpigment nach einem weiteren Ausführungsbeispiel der Erfindung,
- Fig. 6: in (a) ein nicht beanspruchtes magnetisches Mehrschichtpigment in Form eines Nanopartikels mit einem magnetischen metallischen Kern und einer nichtmagnetischen Kohlenstoffummantelung, in (b) eine nicht beanspruchte Mikrokapsel mit einer Vielzahl solcher Nanopartikel ohne äußeres Magnetfeld, und in (c) die Mikrokapsel von (b) im Magnetfeld einer Verifikationseinrichtung,
- Fig. 7: in (a) und (b) eine Banknote mit einer erfindungsgemäßen Sicherheitsanordnung aus einem Sicherheitselement und einem spiegelbildlich zur Mittellinie angeordneten Verifikationselement,
- Fig. 8: in (a) eine Identifikationskarte mit einem erfindungsgemäßen Sicherheitselement, in (b) eine Kartenaufnahme mit einer Verifikationseinrichtung für die Identifikationskarte von (a) und in (c) die Kartenaufnahme mit eingelegter Identifikationskarte, und
- Fig. 9: eine Identifikationskarte mit einer weiteren erfindungsgemäßen Sicherheitsanordnung.

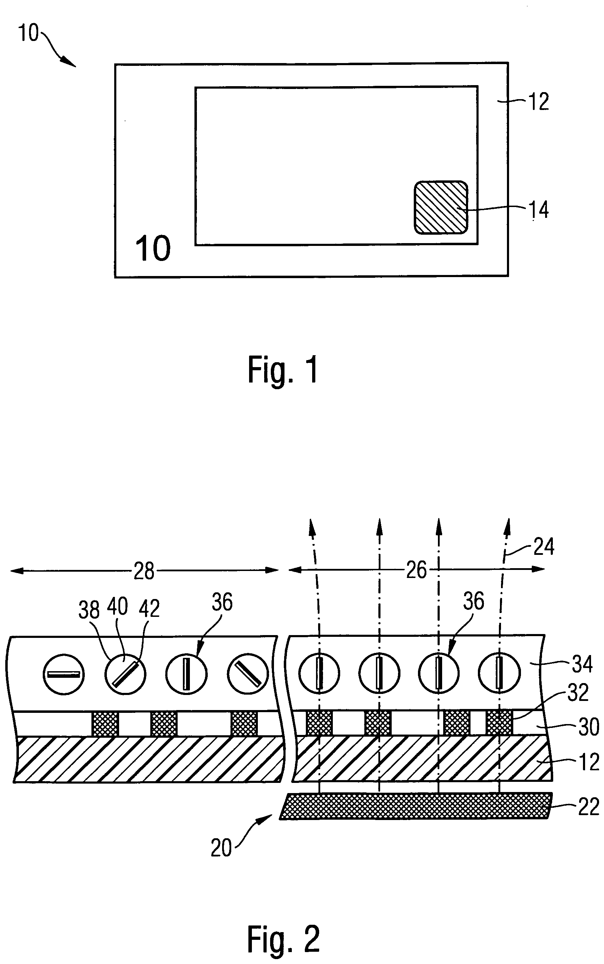

Die Erfindung wird nun am Beispiel von Sicherheitselementen für Banknoten und andere Wertdokumente erläutert. Fig. 1 zeigt dazu eine schematische Darstellung einer Banknote 10 mit einem direkt auf das Banknotenpapier 12 aufgedruckten, optisch variablen Sicherheitselement 14. Die Erfindung ist allerdings nicht auf aufgedruckte Sicherheitselemente und Banknoten beschränkt ist, sondern kann bei allen Arten von Sicherheitselementen eingesetzt werden, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben aufgedruckten Elementen beispielsweise auch Transferelemente, Sicherheitsfäden oder Sicherheitsstreifen und neben Aufsichtselementen auch Durchsichtselemente infrage.

Das Sicherheitselement 14 weist ein reversibles und durch eine magnetische Verifikationseinrichtung 20 (Fig. 2) interaktiv auslösbares Echtheitskennzeichen auf. Ohne Verifikationseinrichtung bzw. mit einem ausreichenden räumlichen Abstand von der Verifikationseinrichtung zeigt das Sicherheitselement 14 einen metallischen Glanz, der mit einem schwach ausgeprägten, einheitlichen optischen Effekt, bevorzugt einem Farbkippeffekt kombiniert ist.

Die Verifikationseinrichtung 20 enthält im Ausführungsbeispiel einen starken Permanentmagneten 22 aus einer Neodym-Eisen-Bor-Legierung, der in Form von Mustern, Linien, Zeichen oder einer Codierung, beispielsweise in Form der Buchstaben "OK" gestaltet ist. Die Oberseite des Magneten 22 bildet dabei einen magnetischen Nordpol und die Unterseite einen magnetischen Südpol, so dass die Magnetfeldlinien 24 des Magneten 22 im Wesentlichen senkrecht auf der Ebene des Magneten 22 stehen.

Wird das Sicherheitselement 14 nun durch den Benutzer unmittelbar über den Magneten 22 der Verifikationseinrichtung 20 gebracht, so wird das visuelle Erscheinungsbild des Sicherheitselements 14 interaktiv verändert. In einem Bereich unmittelbar über dem Magneten 22, der die Form des von dem Magneten 22 dargestellten Motivs, hier beispielsweise die Form der Buchstaben "OK" aufweist, wird der metallische Glanz des Sicherheitselements deutlich reduziert und eine farbige oder informationsführende Untergrundschicht wird sichtbar. Diese visuelle Änderung ist vollständig reversibel. Wird das Sicherheitselement 14 nämlich wieder von der Verifikationseinrichtung 20 entfernt, stellt sich nach kurzer Zeit der Ausgangszustand mit dem metallischen Glanz und dem einheitlichen optischen Effekt, bevorzugt einheitlichen Farbkippeffekt des Sicherheitselements 14 wieder ein.

Der Aufbau eines erfindungsgemäßen Sicherheitselements 14 und das Zustandekommen der reversiblen Änderung des visuellen Erscheinungsbilds werden nun mit Bezug auf die Querschnittsdarstellung der Fig. 2 genauer erläutert. Dabei zeigt die linke Bildhälfte der Figur das Sicherheitselement 14 ohne Verifikationseinrichtung 20 bzw. einen Bereich 28 abseits des Magneten 22, während die rechte Bildhälfte einen Bereichs 26 des Sicherheitselements zeigt, der sich unmittelbar über dem Magneten 22 befindet.

Auf das Banknotenpapier 12 der Banknote 10 ist im Bereich des Sicherheitselements 14 eine Druckschicht 30 aufgebracht, die eine beliebige Information, wie etwa ein Linienmuster 32, eine alphanumerische Zeichenfolge, ein Logo, ein Portrait oder dergleichen darstellen kann. Über diese Druckschicht 30 ist im Siebdruckverfahren eine unter Normalbedingungen opake, optisch variable Farbschicht 34 aufgebracht, die einen Farbkippeffekt, beispielsweise von Grün bei senkrechter Aufsicht zu Blau bei schräger Betrachtung zeigt.

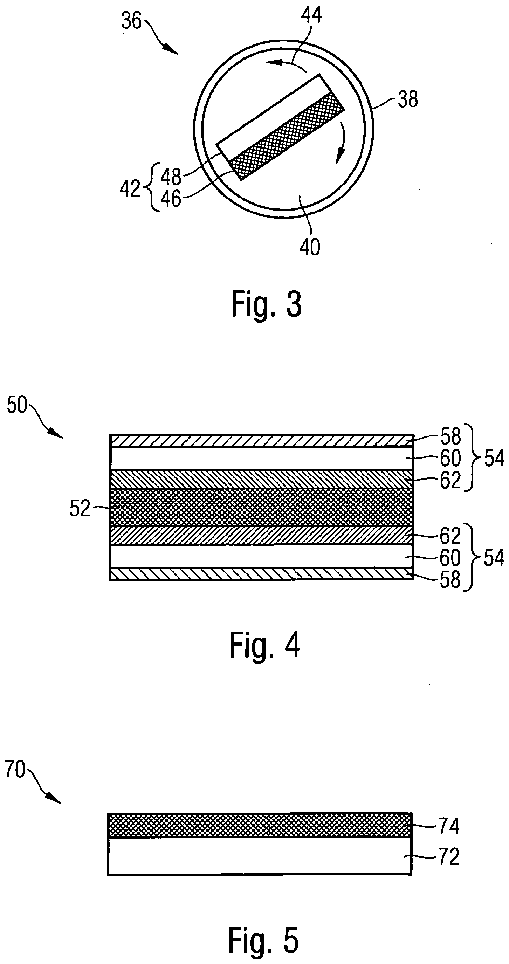

Die optisch variable Farbschicht 34 enthält eine Vielzahl von Mikrokapseln 36, die jeweils eine Kapselhülle 38, eine in der Kapselhülle 38 eingeschlossene Trägerflüssigkeit 40 und zumindest ein optisch variables und magnetisch ausrichtbares Pigment 42 aufweisen. Wie am besten in der Detaildarstellung der Fig. 3 zu erkennen, ist das Pigment 42 dabei in der Mikrokapsel 36 im Wesentlichen frei drehbar 44 und durch ein äußeres Magnetfeld, wie etwa das Feld 24 des Permanentmagneten 22, reversibel ausrichtbar. Weiter ist das Pigment 42 erfindungsgemäß mehrschichtig ausgebildet und weist zumindest eine magnetische Schicht 46 und zumindest eine nichtmagnetische Schicht 48 auf.

Im Ausführungsbeispiel der Figuren 2 und 3 stellen die Pigmente 42, welche jedoch nicht durch die Ansprüche umfasst sind, beschichtete magnetische Reineisenpigmente dar, bei denen magnetische Carbonyleisenplättchen 46 mit einer nichtmagnetischen Siliziumdioxidbeschichtung 48 versehen sind. Derartige Pigmente zeigen bei Änderung des Betrachtungswinkels einen ausgeprägten Farbwechsel von grau-metallic zu schwarz-metallic. Pigmente diese Art sind beispielsweise unter dem Handelsnamen Ferricon (R) Resist von Eckart erhältlich.

Im Rahmen der Erfindung werden die plättchenförmigen Pigmente 42 mit einem hohen Verhältnis von Plättchendurchmesser zu Plättchendicke erzeugt, wobei der (größte) Plättchendurchmesser vorzugsweise zwischen 2 µm und 150 µm, insbesondere zwischen 5 µm und 50 µm, und die Plättchendicke, bevorzugt zwischen 40 nm und 1,5 µm, insbesondere zwischen 200 nm und 1,3 µm liegt.

Da die Pigmente 42 innerhalb der Kapselhülle 38 im Wesentlichen frei drehbar sind, weisen sie ohne äußeres Magnetfeld keine Vorzugsorientierung auf. Die Pigmente 42 sind dann im Wesentlichen zufällig und damit insgesamt isotrop ausgerichtet. Die gleichmäßige Verteilung der Ausrichtung der Pigmente 42 in alle Richtungen ist in der linken Bildhälfte der Fig. 2 schematisch dargestellt.

Im Bereich 26 unmittelbar über dem Magneten 22 werden die magnetisch ausrichtbaren Pigmente 42 dagegen aufgrund ihrer freien Drehbarkeit in der Kapselhülle 38 magnetisch ausgerichtet. Die plättchenförmigen Pigmente 42 orientieren sich dabei mit ihrer Plättchenausdehnung entlang der Magnetfeldlinien 24. Bei der in Fig. 2 gezeigten Situation treten die Magnetfeldlinien 24 im Bereich 26 im Wesentlichen senkrecht durch die Farbschicht 34 hindurch und richten die Pigmente 42 somit ebenfalls im Wesentlichen senkrecht zur Ebene der Farbschicht 34 aus (rechte Bildhälfte der Fig. 2).

Wegen ihrer plättchenförmigen Gestalt wirken die Pigmente 42 für den Betrachter wie die Lamellen einer Jalousie, die den Blick auf die darunterliegende Druckschicht 30, 32 freigeben oder ganz oder teilweise blockieren. In den Bereichen 28, in denen die Pigmente 42 im Wesentlichen isotrop in ihren Kapselhüllen 38 angeordnet sind (linke Bildhälfte der Fig. 2), schränken sie die Sicht auf die Druckschicht 30 so stark ein, dass die Farbschicht 34 in diesem Bereich opak erscheint und der metallischen Glanz und der Farbkippeffekt der Pigmente 42 den visuellen Eindruck des Sicherheitselements 14 dominieren. Es versteht sich, dass in der Praxis die deckenden Wirkung der isotrop orientierten Pigmente 42 durch die Vielzahl der vorhandenen Pigmente verstärkt wird, deren Anzahl die wenigen Pigmente 42 der schematischen Darstellung der Fig. 2 natürlich um ein Vielfaches übersteigt.

Im Bereich 26, in dem die Pigmente 42 durch den Magneten 22 im Wesentlichen senkrecht zur Ebene der Farbschicht 34 ausgerichtet sind, geben diese dagegen wie die parallel gestellten Lamellen einer Jalousie den Blick auf die darunterliegende Druckschicht 30 und das Linienmuster 32 frei. Wegen des großen Verhältnisses von Plättchendurchmesser zu Plättchendicke ergibt sich ein hoher Kontrast zwischen deckenden Teilbereichen 28 und transluzenten Teilbereichen 26. Darüber hinaus erscheint das durch die Plättchenausrichtung in den Teilbereichen 26, 28 erzeugte Motiv für das menschliche Auge mit einem effektvollen, dreidimensional anmutenden Erscheinungsbild.

Wird das Sicherheitselement 14 wieder von dem Magneten 22 entfernt, so relaxieren die magnetisch ausgerichteten Pigmente 42 aufgrund ihrer Beweglichkeit innerhalb der Kapselhülle 38 nach einiger Zeit wieder in den im Wesentlichen isotropen Ausgangszustand der linken Bildhälfte der Fig. 2. Die Änderung des visuellen Erscheinungsbilds des Sicherheitselements 14 wird also interaktiv ausgelöst und ist vollständig reversibel. Die Geschwindigkeit, mit der die Pigmente 42 in ihren Ausgangszustand zurückkehren, kann beispielsweise durch die Viskosität der Trägerflüssigkeit 40 in weitem Rahmen nach Wunsch eingestellt werden.

Es hat sich herausgestellt, dass durch die Mikroverkapselung der sowohl optisch variablen als auch magnetisch ausrichtbaren Pigmente 42 visuell sehr eindrucksvolle Effekte, insbesondere Farbkippeffekt, entstehen, die, wie oben beschrieben, mit einem interaktiven auslösbaren 3D-Effekt kombiniert sind. Wegen der erzielbaren eindrucksvollen Effekte, insbesondere Farbkippeffekte, wird erfindungsgemäß auf die Hinzufügung von Farbmittel zur Trägerflüssigkeit 40 und die Hinzufügung weiterer farbiger oder optisch variabler Pigmente zur Farbschicht 34 verzichtet. Auf diese Weise wird eine einfache und kostengünstige Herstellung der Sicherheitselemente ermöglicht, ohne dass Abstriche bei der Qualität des visuellen Erscheinungsbildes in Kauf genommen werden müssen. Ferner weist das erfindungsgemäße Sicherheitselement mit optisch variablen und zugleich magnetischen Eigenschaften aufgrund der erzielbaren eindrucksvollen optisch variablen Effekte einen sehr hohen Wiedererkennungswert und damit einen sehr hohen Fälschungsschutz auf. Schließlich erlaubt die Mehrschichtigkeit der Pigmente 42, weitestgehend auf Stoffe zu verzichten, die aus Gesundheits- und/oder Umweltgesichtspunkten bedenklich sind, wie etwa Nickel oder Kobalt.

Besonders vorteilhafte Ausgestaltungen erfindungsgemäßer Mikrokapseln und magnetisch ausrichtbarer Pigmente werden nun mit Bezug auf die Figuren 3 bis 6 näher beschrieben.

In Fig. 3 ist zur Illustration eine einzelne Mikrokapsel 36 der Farbschicht 34 der Fig. 2 herausgegriffen und schematisch mit ihren Bestandteilen im Querschnitt gezeigt.

Der Durchmesser der Mikrokapseln 36 liegt erfindungsgemäß zwischen 1 µm und 200 µm, vorzugsweise zwischen 2 µm und 80 µm. Die Kapselhülle 38 der Mikrokapseln 36 besteht aus einem polymeren Hüllenmaterial. Verkapselungsverfahren und geeignete Hüllenmaterialien sind dem Fachmann bekannt. Insbesondere sind Aminoplaste, Phenoplaste, Gelatine und modifizierte Gelatine, Polyurethane und Polyacrylate als Hüllenmaterial geeignet. Die Dicke der Kapselhülle 38 beträgt im Rahme der Erfindung typischerweise zwischen 5 % und 30 %, vorzugsweise zwischen 10 % und 20 % des Kapseldurchmessers.

In vorteilhaften Gestaltungen enthält die Kapselhülle 38 neben dem polymeren Basismaterial eine weitere Schicht, die gewünschte Eigenschaften der Hülle verbessert, beispielsweise der Hülle eine höhere Widerstandsfähigkeit gegen chemische Einflüsse verleiht.

Die in der Kapselhülle 38 eingeschlossene Trägerflüssigkeit 40 weist zweckmäßig eine Viskosität von 1 mPa*s bis 4000 mPa*s, insbesondere von 5 mPa*s bis 120 mPa*s, jeweils gemessen bei 20 °C, auf. Durch die Viskosität der Trägerflüssigkeit 40 kann die Geschwindigkeit der Ausrichtung und der Rückkehr der Pigmente 42 zum isotropen Ausgangszustand gezielt beeinflusst werden.

Die Trägerflüssigkeit 40 besteht mit Vorteil aus einer Mischung von bis zu vier Substanzklassen, nämlich aus 10 % bis 98 % eines unpolaren Trägermediums, aus 0 bis 90 % eines amphiphilen Trägermediums, aus 0 bis 10 % eines Oxidationsschutzstoffs und aus 0 bis 10 % Additiven.

Als unpolares Trägermedium kommen vor allem Fettsäureester, insbesondere Triglyceride, gebildet aus Fettsäuren mit durchschnittlich nicht mehr als 1,5 Doppelbindungen infrage. Alternativ oder zusätzlich können Kohlenwasserstoffe, zweckmäßig mit einem Flammpunkt oberhalb von 65 °C, bevorzugt sogar oberhalb von 80 °C, als unpolares Trägermedium eingesetzt werden. Gesättigte Kohlenwasserstoffe sind dabei bevorzugt, besonders gut sind nach gegenwärtiger Kenntnis Isoparaffine geeignet. Auch Pflanzenöle, wie Sonnenblumen-, Oliven- oder Traubenkernöl und/oder Siliconöle können alternativ oder zusätzlich als unpolares Trägermedium verwendet werden.

Das amphiphile Trägermedium liegt besonders bevorzugt in einem Gewichtsanteil von 4 % bis 40 % vor. Als amphiphiles Trägermedium eignen sich beispielsweise ionische Tenside, Phospholipide, Fettalkohole, Fettalkoholderivate und Fettsäurederivate. Besonders bevorzugt sind gegenwärtig nichtionische Tenside bzw. generell oberflächenaktive Substanzen mit einem HLB (Hydrophilic-Lipophilic-Balance) -Wert nach Davies von weniger als 4.0, insbesondere von 1,0 bis 1,1. Beispielsweise kann als amphiphiles Trägermedium eine Substanz eingesetzt werden, die einen HLB-Wert nach Davies von 1,03 aufweist. Selbstverständlich kommen auch Mischungen der genannten Substanzen als amphiphiles Trägermedium infrage.

Als Oxidationsschutz kann die Trägerflüssigkeit beispielsweise Tocopherole, Tocotrienole oder Aldehyde enthalten. Als Additive kommen insbesondere Infrarot-Absorber oder UV-Absorber wie Hydroxyphenylbenzotriazole, Polymerisations-Inhibitoren, Stabilisatoren, Netz- und Dispergieradditive, Hydroxybenzophenon-Derivate oder nanopartikuläre UV-Absorber in Betracht.

Schließlich enthalten die Mikrokapseln 36 jeweils ein oder mehrere optisch variable, magnetisch ausrichtbare Mehrschichtpigmente 42. Im Ausführungsbeispiel der Fig. 3 sind die Mehrschichtpigmente 42, welche nicht durch die Ansprüche umfasst sind, Reineisenpigmente in Form von magnetischen Carbonyleisenplättchen 46, die mit einer nichtmagnetischen Siliziumdioxidbeschichtung 48 versehen sind, wie oben bereits genauer beschrieben.

Neben solchen beschichteten magnetischen Reineisenpigmenten können auch andere magnetische Mehrschichtpigmente vorteilhaft eingesetzt werden. In einer bevorzugten Erfindungsvariante sind die magnetischen Mehrschichtpigmente dabei nichtsphärisch, insbesondere plättchenförmig ausgebildet und weisen einen größten Durchmesser zwischen 2 µm und 150 µm, vorzugsweise zwischen 5 µm und 50 µm auf. Die magnetischen Mehrschichtpigmente weisen zumindest eine magnetische Schicht und zumindest eine nichtmagnetische Schicht auf. Der Gewichtsanteil der magnetischen Substanzen liegt dabei mit Vorteil zwischen 10 % und 90 %, insbesondere zwischen 35 % und 75 %.

Für die magnetischen Schichten kommen magnetische Metalloxide, erfindungsgemäß Eisenoxide, und dabei bevorzugt Fe₃O₄, in Betracht. Auch magnetische Mischmetalloxide, wie etwa Chromeisenoxid, können als magnetische Schichten eingesetzt werden.

Für die unmagnetischen Schichten kommen insbesondere Oxide, wie Siliziumdioxid, Titandioxid oder Zinnoxid, oder unmagnetische Metalle, wie etwa Aluminium, Chrom, Kupfer oder Gold, in Betracht. Aber auch organische oder siliziumorganische Verbindungen kommen als unmagnetische Schichtmaterialien infrage. Insbesondere wurde festgestellt, dass für den Prozess nicht ohne Weiteres geeignete Pigmente als erfindungsgemäße Pigmente eingesetzt werden können, wenn die Oberfläche dieser Pigmente mit einer Silizium enthaltenden Schicht, insbesondere durch eine Silanisierung, ausgestattet wird (Stabilisierung der Pigmente).

Eine der magnetischen oder unmagnetischen Schichten kann auch durch das Trägermaterial des Pigments gebildet sein, beispielsweise bei Pigmenten, die auf Glimmer-, Al₂O₃-, SiO₂- oder Eisenoxid-Flocken basieren.

Ein konkretes Beispiel für ein besonders vorteilhaftes nicht beanspruchtes optisch variables, magnetisches Interferenzpigment 50 ist in Fig. 4 dargestellt. Das magnetische Interferenzpigment 50 besteht aus insgesamt sieben Schichten und enthält neben einer Magnetschicht zwei Fabry-Perot-Strukturen, die dem Pigment sein optisch variables Erscheinungsbild verleihen. Das magnetische Interferenzpigment 50 enthält eine metallische oder oxidische Magnetschicht 52, die auf beiden Seiten mit Fabry-Perot-Strukturen 54, 56 versehen ist, die jeweils aus einer dünnen Chrom-Absorberschicht 58, einer dielektrischen MgF₂-Abstandsschicht 60 aus und einer Aluminium-Reflektorschicht 62 bestehen. Die beiden Fabry-Perot-Strukturen 54, 56 können identisch oder auch unterschiedlich ausgebildet sein und im letzteren Fall von gegenüberliegenden Seiten unterschiedliche Farbkippeffekte zeigen.

Fig. 5 zeigt ein Ausführungsbeispiel eines erfindungsgemäßen magnetischen Mehrschichtpigments 70. Das Pigment 70 enthält Korund (α-Al₂O₃)-Kristallflocken 72 als Trägermaterial und eine Interferenzbeschichtung 74 aus Eisenoxid (Fe₃O₄) und zusätzlich Titandioxid (TiO₂).

Alternativ kann ein für das erfindungsgemäße Sicherheitselement eingesetztes magnetisches oxidisches Mehrschichtpigment auch Al₂O₃, insbesondere Korund, als Trägermaterial und einer bevorzugt zweischichtigen Interferenzbeschichtung aus Eisenoxid und Magnesiumoxid aufweisen. Des Weiteren ist es denkbar, dass auf dem Trägermaterial, insbesondere Korund, eine Interferenzbeschichtung aus mit Magnesiumoxid dotiertem Eisenoxid, insbesondere γ-Eisenoxid, angeordnet ist, wobei der Anteil von Magnesiumoxid vorzugsweise bis zu 1 Gew.-% beträgt. Die beiden vorstehend genannten oxidischen Mehrschichtpigmente weisen einen optisch variablen, goldenen Farbton auf. Dabei bezieht sich die Formulierung "optisch variabel" in erster Linie auf die Änderung des Reflektionsvermögens bzw. des Glanzes dieser Pigmente, da die Pigmente im Wesentlichen keinen Farbkippeffekt aufweisen.

Um ein silberfarbiges, optisch variables und magnetisches Pigment zu erhalten, kann ein Al₂O₃-, insbesondere Korund-Trägermaterial mit einer Interferenzbeschichtung aus Fe₃O₄ (Eisenoxid) sowie einer oder mehreren Schichten aus SiO₂ (Siliziumdioxid), TiO₂ (Titandioxid) oder SnO₂ (Zinnoxid) versehen werden.

Anzumerken ist bezüglich der magnetischen oxydischen Mehrschichtpigmente, dass als Trägermaterial und als Material der Interferenzbeschichtung selbstverständlich auch andere Substanzen eingesetzt werden können. Beispielsweise kann als Trägermaterial neben Al₂O₃ auch Siliziumdioxid (SiO₂) oder natürliches Mica (ein natürlich vorkommendes Mineral) oder aber synthetische Mica eingesetzt werden. Denkbar sind als Trägermaterial ferner auch synthetische Glasmaterialien. Alle vorstehend genannten magnetischen oxidischen Mehrschichtpigmente sind optisch variabel im Sinne der vorliegenden Erfindung und eignen sich deshalb als optisch variable und magnetisch ausrichtbare Pigmente in Mikrokapseln der optisch variablen Farbschicht.

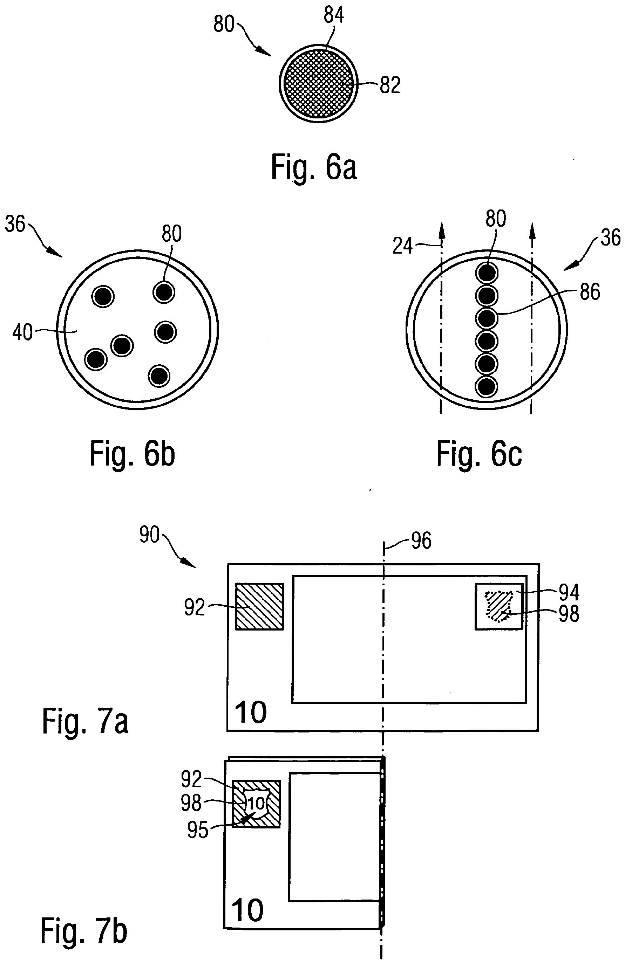

Schließlich sind nach einer weiteren nicht beanspruchten Variante die magnetischen Mehrschichtpigmente durch Nanopartikel 80 mit einem magnetischen metallischen Kern 82 und einer nichtmagnetischen Kohlenstoffummantelung 84 gebildet, wie in Fig. 6(a) gezeigt. Derartige Nanopartikel weisen einen Durchmesser auf, der lediglich zwischen 20 nm und 50 nm, beispielsweise bei etwa 30 nm liegt. Als magnetische Metalle für den Kern 82 kommen beispielsweise Eisen oder Kobalt infrage. Die Kohlenstoffummantelung kann insbesondere aus einer oder mehreren Graphenschichten bestehen, die den Metallkern vor Oxidation schützt. Die Dicke der Kohlenstoffummantelung liegt vorzugsweise im Bereich von 1 nm. Weisen die beschichteten Nanomagnete zumindest in gewissem Umfang optisch variable Eigenschaften im Sinne der weiter oben gegebenen Definition auf, können sie alternativ oder zusätzlich zu den oben beschriebenen nichtsphärischen Pigmenten eingesetzt werden.

Werden Nanopartikel 80 als magnetische Pigmente verwendet, so sind in jeder Mikrokapsel jeweils mehrere Nanopartikel 80 verkapselt, wie in Fig. 6(b) gezeigt. Ohne äußeres Magnetfeld sind die Nanopartikel 80 in der Trägerflüssigkeit 40 der Mikrokapsel 36 gleichförmig verteilt und führen daher zu einem opaken, optisch variablen Erscheinungsbild der Farbschicht 34. Wird die Farbschicht 34 über eine Verifikationseinrichtung 20 gebracht, so richten sich die Nanopartikel 80 kettenförmig 86 entlang der Magnetfeldlinien 24 aus, wie in Fig. 6(c) schematisch dargestellt. In diesem Zustand geben die Nanopartikel 80 den Blick auf eine darunterliegende Druckschicht frei. Nach dem Entfernen des äußeren Magnetfelds relaxieren die Nanopartikel 80 aus der Kettenanordnung 86 und verteilen sich im Volumen der Mikrokapsel 36, so dass nach einiger Zeit wieder ein Zustand wie in Fig. 6(b) erreicht wird. Auch mit sphärischen Nanopartikeln 80 lässt sich so ein reversibles, interaktiv auslösbares Echtheitskennzeichen verwirklichen.

Bei der mit Bezug auf Fig. 2 beschriebenen Gestaltung erfolgt die Echtheitsprüfung des Sicherheitselements 14 mit einer separaten Verifikationseinrichtung 20. Es ist jedoch auch möglich, für die Echtheitsprüfung ein Verifikationselement auf einer Banknote selbst vorzusehen, so dass das Sicherheitselement und das Verifikationselement eine zusammengehörige Sicherheitsanordnung bilden, wie nunmehr anhand des Ausführungsbeispiels der Fig. 7 erläutert.

Die in Fig. 7(a) gezeigte Banknote 90 enthält ein Sicherheitselement 92 der oben beschriebenen Art sowie ein Verifikationselement 94, das bezüglich der Mittellinie 96 der Banknote 90 spiegelsymmetrisch zu dem Sicherheitselement 92 aufgebracht ist. Das Verifikationselement 94 weist einen Magnetbereich 98 auf, in dem magnetisches Material mit einer Magnetisierung senkrecht zur Papierebene und in Form eines gewünschten Motivs, wie etwa des in Fig. 7(a) dargestellten Wappens, vorliegt. Die Motivform des Magnetbereichs 98 kann offen sichtbar sein oder auch verdeckt sein, beispielsweise durch einen dunklen Überdruck.

Durch Falten der Banknote 90 um die Mittellinie 96 kommt das Verifikationselement 96 mit seinem Magnetbereich 98 auf dem Sicherheitselement 92 zu liegen, wie in Fig. 7(b) gezeigt. Durch die Magnetisierung des Magnetbereichs 98 wird der visuelle Eindruck des Sicherheitselements 92 in der oben beschriebenen Art interaktiv und reversibel verändert. Insbesondere zeigt das Sicherheitselement 92 bei der Überlagerung das Wappenmotiv des Magnetbereichs 98. Im Innern des Wappenmotivs können auch weitere Informationen, wie etwa die Denomination 95 der Banknote, sichtbar werden. Die Banknote 90 kann daher durch einfaches Falten auf Echtheit geprüft werden, ohne dass externe Verifikationsmittel erforderlich wären.

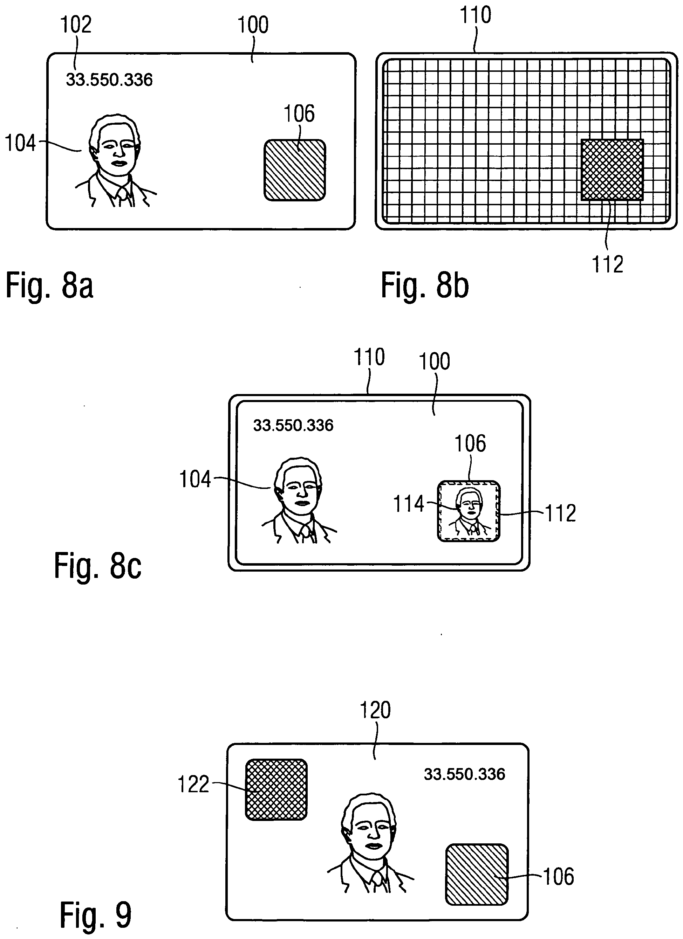

Die Erfindung kann auch bei Karten vorteilhaft eingesetzt werden, wie anhand des Ausführungsbeispiels der Fig. 8 illustriert. Fig. 8(a) zeigt eine Aufsicht auf eine Identifikationskarte 100, wie etwa eine Ausweiskarte, Bankkarte, Kreditkarte oder einen Führerschein. Die Identifikationskarte 100 enthält typischerweise eine oder mehrere offene Kennzeichnungen, beispielsweise eine Seriennummer 102 und/oder ein Portrait 104 des Karteninhabers.

Zusätzlich enthält die Identifikationskarte 100 ein erfindungsgemäßes Sicherheitselement 106, das im Ausführungsbeispiel durch eine Druckschicht mit einer zweiten verkleinerten Portraitdarstellung des Karteninhabers und eine auf die zweite Portraitdarstellung aufgedruckte, optisch variable Farbschicht der in Zusammenhang mit Fig. 2 beschriebenen Art gebildet ist. Wegen der im Wesentlichen isotropen Ausrichtung der verkapselten Pigmente 42 ist die optisch variable Farbschicht unter Normalbedingungen opak, so dass die zweite Portraitdarstellung für einen Betrachter verborgen ist (Fig. 8(a)).

Zur Authentifizierung wird die Identifikationskarte 100 in eine zugehörige Kartenaufnahme 110 gelegt, die, wie in Fig. 8(b) gezeigt, als Verifikationseinrichtung einen auf die Lage, Größe und Form des Sicherheitselements 106 abgestimmten Permanentmagneten 112 enthält. Bei einer echten Identifikationskarte 100 werden die magnetisch ausrichtbaren Pigmente 42 durch die Magnetisierung des Magneten 112 senkrecht zur Ebene des Sicherheitselements 106 ausgerichtet und geben dadurch den Blick auf die zweite Portraitdarstellung 114 frei, wie in Fig. 8(c) dargestellt. Das Erscheinen der zweiten Portraitdarstellung 114 und die Übereinstimmung mit dem ersten Portrait 104 kann somit zur Echtheitsprüfung der Karte 100 und als Berechtigungsnachweis des Karteninhabers eingesetzt werden.

Es versteht sich, dass die Echtheitsprüfung auch auf andere Weise erfolgen kann. Beispielsweise kann der Permanentmagnet 112 selbst in Form eines Motivs, etwa der Buchstaben "OK" ausgebildet sein, wobei das Motiv des Permanentmagneten 112 beim Einlegen einer echten Identifikationskarte 100 in die Kartenaufnahme 110 im Sicherheitselement 106 erscheint. Alternativ sind auch Magnete, wie sie beispielsweise in Lautsprechern von Mobiltelefonen, tragbaren Computern und ähnlichen technischen Geräten Verwendung finden, zur Echtheitsprüfung des erfindungsgemäßen Sicherheitselements geeignet.

Mit Bezug auf Fig. 9 können Identifikationskarten 120 auch in einem weiteren Bereich selbst ein Verifikationselement 122 mit einem motivförmigen Magnetbereich enthalten, mit dem das Sicherheitselement 106 einer zweiten Karte 120 geprüft werden kann. Zur Authentifizierung wird die zweite Karte um 180° gedreht auf die erste Karte aufgelegt, so dass das Sicherheitselement 106 der zweiten Karte auf das Verifikationselement 122 der ersten Karte zu liegen kommt. Das Motiv des Verifikationselements 122 der ersten Karte wird dann in dem Sicherheitselement 106 der zweiten Karte sichtbar. Auf diese Weise können sich zwei Identifikationskarten 120 gegenseitig verifizieren.

### Bezugszeichenliste

- 10: Banknote
- 12: Banknotenpapier
- 14: Sicherheitselement
- 20: Verifikationseinrichtung
- 22: Permanentmagnet
- 24: Magnetfeldlinien
- 30: Druckschicht
- 32: Linienmuster
- 34: optisch variable Farbschicht
- 36: Mikrokapseln
- 38: Kapselhülle
- 40: Trägerflüssigkeit
- 42: magnetisch ausrichtbares Pigment
- 44: Drehung
- 46: magnetische Schicht
- 48: nichtmagnetische Schicht
- 50: Interferenzpigment
- 52: Magnetschicht
- 54, 56: Fabry-Perot-Strukturen
- 58: Chrom-Absorberschicht
- 60: dielektrische MgF₂-Abstandsschicht
- 62: Aluminium-Reflektorschicht
- 70: magnetisches Mehrschichtpigment
- 72: Korund (α-Al₂O₃)-Kristallflocken
- 74: Interferenzbeschichtung
- 80: Nanopartikel
- 82: magnetischer metallischer Kern
- 84: Kohlenstoffummantelung
- 86: kettenförmige Ausrichtung
- 90: Banknote
- 92: Sicherheitselement
- 94: Verifikationselement
- 95: Denomination
- 96: Mittellinie
- 98: Magnetbereich
- 100: Identifikationskarte
- 102: Seriennummer
- 104: Portrait
- 106: Sicherheitselement
- 110: Kartenaufnahme
- 112: Permanentmagnet
- 114: zweite Portraitdarstellung
- 120: Identifikationskarte
- 122: Verifikationselement

## Patentansprüche

1. Optisch variables Sicherheitselement zur Absicherung von Wertgegenständen mit einer optisch variablen Farbschicht, wobei die optisch variable Farbschicht eine Vielzahl von Mikrokapseln enthält, die jeweils eine Kapselhülle,
eine in der Kapselhülle eingeschlossene Trägerflüssigkeit und
zumindest ein optisch variables und magnetisch ausrichtbares Pigment aufweisen, welches in der Mikrokapsel im Wesentlichen frei drehbar und durch ein äußeres Magnetfeld reversibel ausrichtbar ist und welches mehrschichtig mit zumindest einer magnetischen Schicht und mit zumindest einer nichtmagnetischen Schicht ausgebildet ist, wobei das Mehrschichtpigment ein Trägermaterial aus Al₂O₃, SiO₂, natürliches Mica, synthetisches Mica oder synthetisches Glasmaterial umfasst und das Trägermaterial eine Interferenzbeschichtung aus Eisenoxid mit einer oder mehreren Schichten aus SiO₂, TiO₂ oder SnO₂, oder das Trägermaterial eine zweischichtige Interferenzbeschichtung aus Eisenoxid und Magnesiumoxid, oder das Trägermaterial eine Interferenzbeschichtung aus mit Magnesiumoxid dotiertem Eisenoxid, aufweist, das wenigstens eine Mehrschichtpigment als nichtsphärisches Pigment, insbesondere plättchenförmig, ausgebildet ist, wobei das Verhältnis des größten zum kleinsten Durchmesser, nämlich das Durchmesser-zu-Dickenverhältnis, des wenigstens einen nichtsphärischen Pigments mehr als 4:1 beträgt, und wobei
die Mikrokapseln neben dem zumindest einem optisch variablen und magnetisch ausrichtbaren Pigment keine zusätzlichen Farbmittel enthalten, und die optisch variable Farbschicht neben den in den Mikrokapseln enthaltenen Pigmenten keine weiteren farbigen oder optisch variablen Pigmente enthält.

2. Sicherheitselement nach Anspruch 1, **dadurch gekennzeichnet, dass** der Gewichtsanteil der magnetischen Substanzen in den verkapselten Pigmenten zwischen 10 % und 90 %, vorzugsweise zwischen 35 % und 75 % liegt.

3. Sicherheitselement nach Anspruch 1 oder 2, **dadurch gekennzeichnet, dass** die Pigmente innerhalb ihrer Mikrokapsel ohne äußeres Magnetfeld im Wesentlichen isotrop ausgerichtet sind.

4. Sicherheitselement nach wenigstens einem der Ansprüche 1 bis 3, **dadurch gekennzeichnet, dass**das Verhältnis des größten zum kleinsten Durchmesser (Durchmesser-zu-Dickenverhältnis) der nichtsphärischen Pigmente mehr als 10:1 beträgt und besonders bevorzugt zwischen 20:1 und 200:1 liegt.

5. Sicherheitselement nach Anspruch 4, **dadurch gekennzeichnet, dass** der größte Durchmesser der nichtsphärischen Pigmente zwischen 2 µm und 150 µm, vorzugsweise zwischen 5 µm und 50 µm liegt.

6. Sicherheitselement nach wenigstens einem der Ansprüche 1 bis 5, **dadurch gekennzeichnet, dass** die Pigmente magnetische oxidische Mehrschichtpigmente umfassen.

7. Sicherheitselement nach wenigstens einem der Ansprüche 1 bis 6, **dadurch gekennzeichnet, dass** die Trägerflüssigkeit besteht aus 10 % bis 98 % eines unpolaren Trägermediums, aus 0 bis 90 % eines amphiphilen Trägermediums, aus 0 bis 10 % eines Oxidationsschutzstoffs und aus 0 bis 10 % Additiven, insbesondere UV- oder IR-Absorbern, Netz- und Dispergieradditiven, Polymerisations-Inhibitoren oder Stabilisatoren.

8. Sicherheitselement nach wenigstens einem der Ansprüche 1 bis 7 **dadurch gekennzeichnet, dass** die Mikrokapseln einen Durchmesser zwischen 1 µm und 200 µm, vorzugsweise zwischen 2 µm und 80 µm aufweisen.

9. Sicherheitselement nach wenigstens einem der Ansprüche 1 bis 8, **dadurch gekennzeichnet, dass** die optisch variable Farbschicht auf einer informationsführenden Untergrundschicht, insbesondere einer Offset-, Siebdruck-, Flexodruckschicht oder einer Stichtiefdruckschicht aufgebracht ist und/ oder dass die optisch variable Farbschicht mit einer thermochromen oder magnetischen Untergrundschicht kombiniert ist, wobei die magnetische Untergrundschicht vorzugsweise in Form von Mustern, Zeichen oder einer Codierung vorliegt.

10. Verfahren zum Herstellen eines optisch variablen Sicherheitselements zur Absicherung von Wertgegenständen, bei dem auf ein Substrat eine optisch variable Farbschicht aufgebracht wird, die eine Vielzahl von Mikrokapseln enthält, die jeweils eine Kapselhülle, eine in der Kapselhülle eingeschlossene Trägerflüssigkeit und zumindest ein optisch variables und magnetisch ausrichtbares Pigment aufweisen, welches in der Mikrokapsel im Wesentlichen frei drehbar und durch ein äußeres Magnetfeld reversibel ausrichtbar ist und welches mehrschichtig mit zumindest einer magnetischen Schicht und mit zumindest einer nichtmagnetischen Schicht ausgebildet ist, wobei das Pigment ein Trägermaterial aus Al2O3, SiO2, natürliches Mica, synthetisches Mica oder synthetisches Glasmaterial umfasst und das Trägermaterial eine Interferenzbeschichtung aus Eisenoxid, sowie eine oder mehrere Schichten aus SiO2, TiO2 oder SnO2, oder das Trägermaterial eine zweischichtige Interferenzbeschichtung aus Eisenoxid und Magnesiumoxid oder das Trägermaterial eine Interferenzbeschichtung aus mit Magnesiumoxid dotiertem Eisenoxid, aufweist, das wenigstens eine Mehrschichtpigment als nichtsphärisches Pigment, insbesondere plättchenförmig, ausgebildet ist, wobei das Verhältnis des größten zum kleinsten Durchmesser, nämlich Durchmesser-zu-Dickenverhältnis, des wenigstens einen nichtsphärischen Pigments mehr als 4:1 beträgt, wobei die Mikrokapseln neben dem zumindest einem optisch variablen und magnetisch ausrichtbaren Pigment keine zusätzlichen Farbmittel enthalten, und die optisch variable Farbschicht neben den in den Mikrokapseln enthaltenen Pigmenten keine weiteren farbigen oder optisch variablen Pigmente enthält..

11. Sicherheitsanordnung zur Absicherung von Sicherheitspapieren, Wertdokumenten, Datenträgern und dergleichen mit einem Sicherheitselement nach einem der Ansprüche 1 bis 9 und mit einem Verifikationselement mit einem Magnetbereich.

12. Sicherheitsanordnung nach Anspruch 1 1, **dadurch gekennzeichnet, dass** in dem Magnetbereich magnetisches Material in Form von Mustern, Linien, Zeichen oder einer Codierung vorliegt und/oder dass der Magnetbereich im Wesentlichen senkrecht zur Ebene des Verifikationselements magnetisiert ist.

13. Datenträger mit einem Sicherheitselement nach einem der Ansprüche 1 bis 9 oder mit einer Sicherheitsanordnung nach einem der Ansprüche 11 oder 12, wobei das Sicherheitselement und das Verifikationselement der Sicherheitsanordnung bevorzugt geometrisch so auf dem Datenträger angeordnet sind, dass das Sicherheitselement durch Biegen oder Falten des Datenträgers über das Verifikationselement bringbar ist.

## Claims

1. An optically variable security element for securing valuable articles, having an optically variable color layer, wherein the optically variable color layer includes a plurality of microcapsules, each of which exhibits a capsule shell, a carrier liquid enclosed in the capsule shell, and at least one optically variable and magnetically alignable pigment that is substantially freely rotatable in the microcapsule and reversibly alignable by an external magnetic field, and that is developed to be multilayer having at least one magnetic layer and having at least one non-magnetic layer,
wherein the multilayer pigment comprises a carrier material of Al₂O₃, SiO₂, natural mica, synthetic mica or synthetic glass material, and the carrier material is provided with an interference coating composed of iron oxide and one or more layers composed of SiO₂, TiO₂ or SnO₂, or the carrier material is provided with a two-layer interference coating composed of iron oxide and magnesium oxide, or the carrier material is provided with an interference coating composed of iron oxide doped with magnesium oxide,
the at least one multilayer pigment is in the form of a non-spherical pigment, especially platelet-shaped, the ratio of the largest to the smallest diameter, namely the diameter-to-thickness ratio of the at least one non-spherical pigments being more than 4:1, and wherein
the microcapsules include no additional colorant besides the at least one optically variable and magnetically alignable pigment, and the optically variable color layer includes no further colored or optically variable pigments besides the pigments included in the microcapsules.

2. The security element according to claim 1, **characterized in that** the proportion by weight of the magnetic substances in the encapsulated pigments lies between 10% and 90%, preferably between 35% and 75%.

3. The security element according to claim 1 or 2, **characterized in that,** without an external magnetic field, the pigments are aligned substantially isotropically within their microcapsules.

4. The security element according to at least one of claims 1 to 3, **characterized in that** the ratio of the largest to the smallest diameter (diameter-to-thickness ratio) of the non-spherical pigments is more than 10:1, and particularly preferably lying between 20:1 and 200:1.

5. The security element according to claim 4, **characterized in that** the largest diameter of the non-spherical pigments lies between 2 µm and 150 µm, preferably between 5 µm and 50 µm.

6. The security element according to at least one of claims 1 to 5, **characterized in that** the pigments comprise magnetic oxidic multilayer pigments.

7. The security element according to at least one of claims 1 to 6, **characterized in that** the carrier liquid consists of 10% to 98% of a non-polar carrier medium, of 0 to 90% of an amphiphilic carrier medium, of 0 to 10% of an oxidation-protective substance, and of 0 to 10% additives, particularly UV or IR absorbers, wetting and dispersing additives, polymerization inhibitors or stabilizers.

8. The security element according to at least one of claims 1 to 7, **characterized in that** the microcapsules exhibit a diameter between 1 µm and 200 µm, preferably between 2 µm and 80 µm.

9. The security element according to at least one of claims 1 to 8, **characterized in that** the optically variable color layer is applied on an information-bearing background layer, especially an offset, screen printing, flexographic printing layer or an intaglio printing layer, and/or **in that** the optically variable color layer is combined with a thermochromic or magnetic background layer, the magnetic background layer preferably being present in the form of patterns, characters or a code.

10. A method for manufacturing an optically variable security element for securing valuable articles, in which there is applied to a substrate an optically variable color layer that includes a plurality of microcapsules, each of which exhibits a capsule shell, a carrier liquid enclosed in the capsule shell, and at least one optically variable and magnetically alignable pigment that is substantially freely rotatable in the microcapsule and reversibly alignable by an external magnetic field, and that is developed to be multilayer having at least one magnetic layer and having at least one non-magnetic layer, wherein the pigment comprises a carrier material of Al₂O₃, SiO₂, natural mica, synthetic mica or synthetic glass material, and the carrier material is provided with an interference coating composed of iron oxide and one or more layers composed of SiO₂, TiO₂ or SnO₂, or the carrier material is provided with a two-layer interference coating composed of iron oxide and magnesium oxide, or the carrier material is provided with an interference coating composed of iron oxide doped with magnesium oxide,

11. A security arrangement for securing security papers, value documents, data carriers and the like, having a security element according to one of claims 1 to 9 and having a verification element having a magnetic region.

12. The security arrangement according to claim 11, **characterized in that,** in the magnetic region, magnetic material is present in the form of patterns, lines, characters or a code, and/or **in that** the magnetic region is magnetized substantially perpendicular to the plane of the verification element.

13. A data carrier having a security element according to one of claims 1 to 9 or having a security arrangement according to one of claims 11 or 12, the security element and the verification element of the security arrangement preferably being geometrically arranged on the data carrier in such a way that the security element is bringable over the verification element by bending or folding the data carrier.

## Revendications

1. Élément de sécurité optiquement variable, destiné à sécuriser des objets de valeur, avec une couche de couleur optiquement variable, la couche de couleur optiquement variable contenant une pluralité de microcapsules qui contiennent chacune une enveloppe de capsule, un liquide porteur enfermé dans l'enveloppe de capsule et au moins un pigment optiquement variable et magnétiquement orientable, lequel est sensiblement librement rotatif dans la microcapsule et réversiblement orientable par un champ magnétique extérieur et lequel est conçu avec des couches multiples, avec au moins une couche magnétique et avec au moins une couche non magnétique, le pigment multicouches comprenant une matière porteuse en Al₂O₃, en SiO₂, en mica naturel, en mica synthétique ou en matière vitreuse synthétique et la matière porteuse comportant un revêtement à interférence en oxyde de fer, avec une ou plusieurs couches de SiO₂, de TiO₂ ou de SnO₂, ou la matière support comportant un revêtement à interférence bicouches en oxyde de fer et en oxyde de magnésium ou la matière support comportant un revêtement à interférence en oxyde de fer dopé d'oxyde de magnésium, l'au moins un pigment multicouches étant conçu sous la forme d'un pigment non sphérique, notamment en forme de paillettes, le rapport du plus grand au plus petit diamètre, à savoir le rapport du diamètre à l'épaisseur de l'au moins un pigment non sphérique étant supérieur à 4 : 1 et en plus de l'au moins un pigment optiquement variable et magnétiquement orientable, les microcapsules ne contenant aucun produit colorant supplémentaire et en plus des pigments contenus dans les microcapsules, la couche de couleur optiquement variable ne contenant aucun pigment coloré ou optiquement variable supplémentaire.

2. Élément de sécurité selon la revendication 1, **caractérisé en ce que** la part en poids des substances magnétiques dans les pigments encapsulés se situe entre 10 % et 90 %, de préférence entre 35 % et 75 %.

3. Élément de sécurité selon la revendication 1 ou 2, **caractérisé en ce qu'**à l'intérieur de leur microcapsule, les pigments sont orientés de manière sensiblement isotrope, en l'absence de champ magnétique.

4. Élément de sécurité selon au moins l'une quelconque des revendications 1 à 3, **caractérisé en ce que** le rapport du plus grand au plus petit diamètre, (rapport du diamètre à l'épaisseur) des pigments non sphériques est supérieur à 10 : 1 et se situe de manière particulièrement préférentielle entre 20 : 1 et 200 : 1.

5. Élément de sécurité selon la revendication 4, **caractérisé en ce que** le plus grand diamètre des pigments non sphériques se situe entre 2 µm et 150 µm, de préférence entre 5 µm et 50 µm.

6. Élément de sécurité selon au moins l'une quelconque des revendications 1 à 5, **caractérisé en ce que** les pigments comprennent des pigments multicouches d'oxydes magnétiques.

7. Élément de sécurité selon au moins l'une quelconque des revendications 1 à 6, **caractérisé en ce que** le liquide porteur se compose de 10 % à 98 % d'un milieu porteur non polaire, de 0 à 90 % d'un milieu porteur amphiphile, de 0 à 10 % d'un agent antioxydant et de 0 à 10 % d'additifs, notamment d'absorbeurs d'UV ou d'IR, d'additifs réticulants et dispersants, d'inhibiteurs de polymérisation ou de stabilisateurs.

8. Élément de sécurité selon au moins l'une quelconque des revendications 1 à 7 **caractérisé en ce que** les microcapsules présentent un diamètre compris entre 1 µm et 200 µm, de préférence entre 2 µm et 80 µm.

9. Élément de sécurité selon au moins l'une quelconque des revendications 1 à 8, **caractérisé en ce que** la couche de couleur optiquement variable est appliquée sur une couche sous-jacente conductrice d'informations, notamment une couche imprimée offset, sérigraphiée, flexographiée ou une couche imprimée en taille douce et/ ou la couche de couleur optiquement variable est associée à une couche sous-jacente thermochromique ou magnétique, la couche sous-jacente magnétique se présentant de préférence sous la forme de motifs, de caractères ou d'un codage.

10. Procédé destiné à fabriquer un élément de sécurité optiquement variable, destiné à sécuriser des objets de valeur, lors duquel on applique sur un substrat une couche de couleur optiquement variable qui contient une pluralité de microcapsules, qui comportent chacune une enveloppe de capsule, un liquide porteur enfermé dans l'enveloppe de capsule et au moins un pigment optiquement variable, magnétiquement orientable, lequel est sensiblement librement rotatif dans la microcapsule et réversiblement orientable par un champ magnétique extérieur et lequel est conçu avec des couches multiples, avec au moins une couche magnétique et avec au moins une couche non magnétique, le pigment multicouches comprenant une matière porteuse en Al₂O₃, en SiO₂, en mica naturel, en mica synthétique ou en matière vitreuse synthétique et la matière porteuse comportant un revêtement à interférence en oxyde de fer, avec une ou plusieurs couches de SiO₂, de TiO₂ ou de SnO₂, ou la matière support comportant un revêtement à interférence bicouches en oxyde de fer et en oxyde de magnésium ou la matière support comportant un revêtement à interférence en oxyde de fer dopé d'oxyde de magnésium, l'au moins un pigment multicouches étant conçu sous la forme d'un pigment non sphérique, notamment en forme de paillettes, le rapport du plus grand au plus petit diamètre, à savoir le rapport du diamètre à l'épaisseur de l'au moins un pigment non sphérique étant supérieur à 4 : 1 et en plus de l'au moins un pigment optiquement variable et magnétiquement orientable, les microcapsules ne contenant aucun produit colorant supplémentaire et en plus des pigments contenus dans les microcapsules, la couche de couleur optiquement variable ne contenant aucun pigment coloré ou optiquement variable supplémentaire.

11. Dispositif de sécurité, destiné à sécuriser des papiers de sécurité, des documents de valeur, des supports de données et similaires, avec un élément de sécurité selon l'une quelconque des revendications 1 à 9 et avec un élément de vérification avec une zone magnétique.

12. Dispositif de sécurité selon la revendication 11, **caractérisé en ce que** dans la zone magnétique se trouve de la matière magnétique sous la forme de motifs, de lignes, de caractères ou d'un codage et/ ou **en ce que** la zone magnétique est aimantée sensiblement à la perpendiculaire du plan de l'élément de vérification.

13. Support de données avec un élément de sécurité selon l'une quelconque des revendications 1 à 9 ou avec un dispositif de sécurité selon l'une quelconque des revendications 11 ou 12, l'élément de sécurité et l'élément de vérification du dispositif de sécurité étant de préférence géométriquement placés sur le support de données de telle sorte que par flexion ou pliage du support de données, l'élément de sécurité puisse être amené au-dessus de l'élément de vérification.
